# EUROPEAN PATENT SPECIFICATION

(11) **EP 3 998 160 B1**
(45) Date of publication and mention of the grant of the patent: **11.03.2026**
(21) Application number: 20836479.4
(22) Date of filing: 11.05.2020
(51) Int. Cl.: D21H 19/58, D21H 19/56, B32B 27/20, B32B 27/30, B32B 27/32, C09D 135/02, D21H 19/20

(54) **PRINTING SHEET AND METHOD FOR MANUFACTURING PRINTING SHEET**
DRUCKBOGEN UND VERFAHREN ZU SEINER HERSTELLUNG
FEUILLE D'IMPRESSION ET MÉTHODE DE FABRICATION DE FEUILLE D'IMPRESSION

(30) Priority: 08.07.2019 JP 2019127179
(43) Date of publication of application: 18.05.2022
(73) Proprietor: TBM Co., Ltd., Tokyo 100-0006 (JP)
(72) Inventor: SATO, Erina, Tokyo 104-0061 (JP)
(74) Representative: Papula Oy
(86) International application number: PCT/JP2020/018869
(87) International publication number: WO 2021/005880

(56) References cited:
- EP-A1- 0 782 932
- EP-A1- 1 174 262
- EP-A1- 3 260 292
- WO-A1-2004/030917
- WO-A1-2016/110711
- WO-A1-2018/047754
- WO-A1-2018/096834
- WO-A1-2019/059222
- WO-A1-2019/059222
- JP-A- 2001 225 422
- JP-A- 2018 508 607
- US-A1- 2005 032 644

## Description

### Field

The present invention relates to a printing sheet and a method for producing the printing sheet. More specifically described, the present invention relates to a technique for improving printability, water resistance, weather resistance, an antistatic property, and the like of a printing sheet having a coating layer on the surface of a substrate.

### Background

Conventionally, a printing sheet using paper and a plastic sheet made of polyester, polypropylene, or the like for the substrate of the printing sheet has been known. In particular, for example, with respect to applications for posters and outdoor printed matters in which properties such as water resistance and tear strength are required, a plastic sheet or synthetic paper that is obtained by, for example, adding an inorganic filler and a small amount of additives to a thermoplastic resin to form a sheet-like product has been mainly used.

In addition, environmental protection becomes an international issue now and thus reduction in the consumption amount of the thermoplastic plastics and paper materials has been significantly studied. From such a viewpoint, an inorganic substance powder-blended thermoplastic plastic composition made by highly filling inorganic substance powder into a thermoplastic plastic has been developed and has been put into practical use as a printing sheet as described above (refer to, for example, Patent Literature 1).

In the case where a sheet made of the material as described above is considered to be used as a printing application, in particular, the surface of the plastic sheet is modified in many cases in order to improve adhesion force between an ink and the plastic sheet on the printing surface and color development. Specifically, a coating liquid made of a clay latex or an acrylic polymer is applied to form a coating layer also called an ink receiving layer, a print receiving layer, or the like (for example, Patent Literature 2 to 4).

However, for example, in the case where the clay latex is applied, the whiteness of the printing sheet after application is low because the component of the clay has a color, and one may be concerned about the color as a substitute for paper. In addition, the latex used includes a polystyrene component. This also causes a problem in that deterioration due to sunlight, particularly ultraviolet rays, is significant and thus yellowing over time occurs.

On the other hand, in the case where the conventional acrylic polymer is applied as described in Patent Literature 2 and Patent Literature 3, the hydrophilic acrylic polymer material added in order to exhibit an antistatic effect is highly environmentally dependent. This causes a problem in that the antistatic effect is low, in particular, under low humidity conditions such as in winter and thus static electricity is likely to be generated. The generation of the static electricity causes problems of paper jams during printing and blocking between sheets, which is not preferable. In the case where a plastic sheet made of an olefine-based polymer such as polyethylene and polypropylene is coated with the acrylic polymer, the polarity of the plastic sheet serving as a substrate is low and thus the adhesion force between the plastic sheet serving as the substrate and a coating liquid is weak under some production conditions. Therefore, a problem of peeling from the interface between the sheet and the coating when application is performed also arises. In the case where the acrylic polymer coating alone is used, the fixability with the toner is low and thus the tonner is necessary to be fixed at a high temperature with respect to printability, in particular, in laser printer (LBP) printing. This causes a problem in that the sheet is melted by heat and troubles in which the sheet causes paper jams in a printing apparatus frequently occur.

Patent Literature 4 discloses, for example, enhancement in high-speed printability at low temperature by using, as the acrylic polymer, a mixture of at least two components of a latex of an acrylic polymer having an acid value of 20 mg KOH/g to 60 mg KOH/g and a Tg of less than 35°C and at least one latex of an acrylic polymer having a Tg of more than 90°C, improvement in the thermal insulation properties of the coating layer by blending hollow polymer particles into the coating liquid composition, and enhancement in the smoothness of the coating layer by blending silica particles having a primary particle diameter of less than 100 nm into the coating liquid composition. However, in the case where these blends are used for the coating liquid composition, the adhesion force between the plastic sheet serving as the substrate and the coating liquid may be further decreased and no particular improvement may be expected from the viewpoint of the antistatic effect as described above.

Patent Literature 5 discloses that a predetermined amount of titania particles is blended together with clay, calcium carbonate, and the like to a polymer binder made of a vinyl acetate, vinyl-acrylic, styrene-acrylic, or styrene-butadiene-acrylic polymer using tetrapotassium pyrophosphate as a dispersing agent and the resultant mixture is applied to a substrate to give a sheet having a high whiteness. Although the whiteness can be surely improved by blending the predetermined amount of titania particles, any improvement for solving the problems of adhesiveness between the substrate and the coating layer as described above and poor water resistance and poor weather resistance of the coating layer cannot be particularly expected.

Patent Literature 6 has described development of a printing sheet having high smoothness obtained by coating a substrate surface having smoothness made of fibers having a weighted average of a fiber length of more than 0.9 mm with a composition made by blending pigments such as calcium carbonate-precipitated angonite, clay, and a hollow spherical polyethylene pigment to an acrylic binder in a ratio of binder:pigment of 100:15 to 100:40. However, in the case where such a composition is used, the smoothness of the sheet can be expected to be improved, whereas any improvement of the whiteness of the sheet, printability, adhesiveness between the substrate and the coating layer, the antistatic property, and the like cannot be expected.

Patent Literature 7 discloses the coating composition including high aspect ratio clay in a proportion of 5 parts by weight to 30 parts by weight and calcium carbonate including 90% or more of particles having a size of smaller than 2 µm in proportion of 70 parts by weight to 95 parts by weight as a coating composition applied onto a substrate by a DF coater method for obtaining a printing sheet and discloses that this coating composition economically provides a sheet having high whiteness. Due to this technique disclosed in this Patent Literature, the improvement in the whiteness of the sheet can be expected by highly blending calcium carbonate, while the highly blended calcium carbonate may change the texture of the sheet (increasing the glossiness of printed matter). In Patent Literature 7, a SBR resin is used as the binder component of the coating composition and thus problems of the poor weather resistance and the poor water resistance due to including the styrene component as described above arise.

Patent Literature 8 discloses a printing sheet made by forming a layer in which hard polymer particles such as polymethyl methacrylate are blended in a binder for film formation and further a layer having a composition in which particles such as kaolin, calcined clay, structured clay, heavy calcium carbonate, precipitated calcium carbonate, titanium dioxide, aluminum trihydride, satin white, silica, zinc oxide, and barium sulfate are added on a substrate as the ink receiving layer. Although improvement in adhesiveness between the substrate and the coating layer and improvement in water resistance by blending the polymethyl methacrylate particles may be expected, the matte feeling of the sheet may be enhanced by blending the polymethyl methacrylate particles. In the case where the polymethyl methacrylate particles are mainly used as the particles to be blended in the receiving layer, for example, the fixability with the toner is not sufficient when LBP printing is performed and thus fixing at high temperature is required. Consequently, similarly to the above case, the paper jam may be caused by melting the sheet due to heat. In addition, the polymethylmethacrylate particles are disadvantageous from the economic viewpoint and use of the polymethyl methacrylate particles leads to an increase in the price of the sheet.

Patent Literature 9 discloses a sheet made by forming a layer having a composition in which a polymer pigment such as styrene-acrylic copolymer particles is blended with an acrylic polymer, a styrene-acrylic copolymer, or the like, and precipitated calcium carbonate (PCC), heavy natural calcium carbonate, kaolin, or other clay are further blended in the above layer on a substrate as the receiving layer in preparing a hologram. Similarly to the technique in Patent Literature 8, however, in the case where polymer particles such as styrene-acrylic copolymer particles are used, the matte feeling of the sheet may be enhanced. In addition, the toner in LBP printing may fail to be sufficiently attached and the paper jam may occur inside a printer. In addition, the polymer particles are disadvantageous from the economical viewpoint and use of the polymer particles leads to an increase in the price of the sheet. The problem of moisture resistance due to including the styrene components also remains.

Patent Literature 10 has described a constitution in which, as an inkjet recording sheet, an ink receiving layer including amorphous silica and a binder as main components is provided on one surface of a substrate and a back layer including a pigment selected from the group consisting of delaminated clay, kaolin, talc, calcium carbonate, and a combination of delaminated clay and talc and including a styrene-acrylic copolymer, a styrene-butadiene copolymer, or an ethylene-vinyl acetate as the latex of a binder is provided on the surface of the substrate opposite to the surface where the ink receiving layer is provided. In this recording sheet, the back layer is formed by blending clay and calcium carbonate with the latex of the binder on the opposite surface to the receiving layer. The back layer is provided in order to provide an excellent gluing processability of the sheet. This inkjet recording sheet does not have a constitution that solves the problem in the receiving layer as the problem of the present invention and includes the styrene component as the binder component, which causes the problem of moisture resistance.

Patent Literature 11 discloses a constitution made by forming a surface size layer made of oxidized starch, a sizing agent, and an acrylic polymer on the outer surface side of a paper liner forming the surface of a gypsum board and furthermore, by forming a coating layer made by providing at least one kind of inorganic filler such as calcium carbonate, clay, aluminum silicate, calcined clay, titanium dioxide, and a mixture thereof and a binder such as a styrene-acrylic copolymer. Although this Patent Literature has described that a decorative pattern may be printed on the coating layer, a highly hydrophilic binder is used in the paper liner because water permeability is required for forming a gypsum board. Even in the case where such a coating layer is applied to the printing sheet according to the present invention, problems such as poor weather resistance and poor water resistance cannot be solved. WO2004/030917A discloses a printing sheet comprising a substrate and, on at least one side of the substrate, an image receptive coating layer. It additionally discloses a method of manufacturing as well as to a use of such a printing sheet. EP1174262A1 discloses a multi-layered stretched resin film which comprises a base layer (A) containing 40 to 90 wt% of a polyolefinic resin and 10 to 60 wt% of an inorganic fine powder or an organic filler; and an amorphous resin-containing layer (B) provided on at least one side of such base layer (A) , and containing 0 to 85 wt% of a polyolefinic resin and 15 to 100 wt% of an amorphous resin; where the amorphous resin-containing layer (B) has a porosity of 5% or below.

### Citation List

### Patent Literature

Patent Literature 1: WO 2014/109267 Pamphlet
Patent Literature 2: Japanese Examined Patent Application Publication No. H7-20739
Patent Literature 3: Japanese Patent Application Laid-open No. 2015-6793
Patent Literature 4: WO 2006/051092 Pamphlet
Patent Literature 5: Japanese Patent Application Laid-open No. 2014-189941
Patent Literature 6: Published Japanese Translation of PCT International Publication for Patent Application No. 2007-520642
Patent Literature 7: WO 2011/114456 Pamphlet
Patent Literature 8: Published Japanese Translation of PCT International Publication for Patent Application No. 2005-520065
Patent Literature 9: Published Japanese Translation of PCT International Publication for Patent Application No. 2004-533922
Patent Literature 10: Japanese Patent No. 4403131
Patent Literature 11: Published Japanese Translation of PCT International Publication for Patent Application No. 2002-513873

### Summary

### Technical Problem

The present invention has been made in view of the above actual situations. An object of the present invention is to provide an improved printing sheet and a method for producing the same. An object of the present invention is also to provide a printing sheet that has excellent printability, excellent adhesiveness between the substrate and the coating layer, and excellent antistatic performance and thus is less likely to cause troubles such as paper jams during printing, and further has excellent properties such as water resistance and weather resistance in a printing sheet having a coating layer for receiving an ink on at least one surface of the substrate and a method for producing the same.

### Solution to Problem

As a result of intensive study for solving the troubles such as poor adhesion between the substrate and the coating layer due to the non-polarity of the substrate resin such as polypropylene and polyethylene, poor water resistance of the coating layer due to the water-soluble emulsion of the acrylic polymer, yellowing due to poor weather resistance, and paper jams at the printing process due to charging caused by high surface resistivity, which are the problems of the printing sheet having the coating layer formed from a conventional acrylic polymer aqueous emulsion, the inventors of the present invention have found that improvement in the adhesion between the substrate and the coating layer, improvement in the water resistance, improvement in the weather resistance, and improvement in the antistatic performance due to lowering the surface resistivity while whiteness is being retained are observed by adding a predetermined amount of clay into the acrylic polymer aqueous emulsion and further blending a predetermined amount of light calcium carbonate in combination with the clay.

Namely, the presence of the clay (and light calcium carbonate) in the continuous phase made of the acrylic polymer in the coating layer provides improvement in adhesion due to an anchor effect caused by forming physical irregularities at the bonding interface with the substrate, the presence of the clay (and light calcium carbonate) on the surface of the coating layer provides an improvement effect in the weather resistance due to the scattering of incident light caused by forming fine irregularities on the surface of the sheet, the presence of the light calcium carbonate in addition to the clay on the surface of the coating layer retains sufficient water resistance, and presence of the clay provides an excellent antistatic effect. Furthermore, blending the clay and the light calcium carbonate in a well-balanced predetermined proportion in the coating layer allows the printability (fixability and transferability) of the obtained printing sheet to LBP and the offset printability to be improved.

Consequently, the present invention has been attained based on these findings.

Namely, the present invention solving the above-described problem includes a printing sheet comprising: a coating layer formed on one surface or both surfaces of a substrate, the coating layer containing clay in a proportion of 35% by mass or more and 65% by mass or less and light calcium carbonate in a proportion of 5% by mass or more and 30% by mass or less in a continuous phase of an acrylic polymer, wherein the substrate is a substrate including a polyolefin-based resin and an inorganic substance powder in a ratio of 50:50 to 10:90 in a mass ratio.

As one aspect of the printing sheet according to the present invention, a printing sheet is represented in which the inorganic substance powder is a calcium carbonate powder.

As one aspect of the printing sheet according to the present invention, a printing sheet is represented in which a volume average particle diameter of the clay is 1.0 µm or more and 10.0 µm or less.

As one aspect of the printing sheet according to the present invention, a printing sheet is represented in which a volume average particle diameter of the light calcium carbonate is 0.05 µm or more and 2.00 µm or less.

As one aspect of the printing sheet according to the present invention, a printing sheet is represented in which the acrylic polymer is an alkyl (meth)acrylate.

As one aspect of the printing sheet according to the present invention, a printing sheet is represented in which the alkyl (meth)acrylate is a kind or two or more kinds of alkyl (meth)acrylates selected from the group consisting of methyl acrylate, ethyl acrylate, n-propyl acrylate, isopropyl acrylate, n-butyl acrylate, isobutyl acrylate, n-octyl acrylate, 2-ethylhexyl acrylate, isooctyl acrylate, nonyl acrylate, methyl methacrylate, ethyl methacrylate, n-propyl methacrylate, isopropyl methacrylate, n-butyl methacrylate, isobutyl methacrylate, n-octyl methacrylate, 2-ethylhexyl methacrylate, isooctyl methacrylate, 2-hydroxymethyl acrylate, 2-hydroxyethyl methacrylate, 2-hydroxypropyl acrylate, and 2-hydroxypropyl methacrylate.

The present invention solving the above-described problem includes a method for producing a printing sheet as defined in the current claim 7.

As one aspect of the method for producing the printing sheet according to the present invention, a method for producing the printing sheet is represented in which the method comprises extruding and forming a sheet comprising a polyolefin resin and inorganic substance powder in a ratio of 50:50 to 10:90 in a mass ratio, subjecting the sheet to a stretching treatment process to form the substrate, and applying the acrylic polymer aqueous emulsion to one surface or both surfaces of the substrate in the form of a sheet.

### Advantageous Effects of Invention

According to the present invention, the printing sheet that has excellent printability, excellent adhesiveness between the substrate and the coating layer, and excellent antistatic performance and thus is less likely to cause troubles such as paper jams during printing, and further has excellent properties such as water resistance and weather resistance is provided with respect to the printing sheet having a coating layer for receiving an ink on at least one surface of the substrate. According to the present invention, the printing sheet also has excellent whiteness, texture (appropriate glossiness), and the quick-drying property of an ink when used for oil-based offset printing, UV offset printing, or the like. Therefore, the printing sheet also has excellent offset suitability.

### Description of Embodiments

Hereinafter, the present invention will be described in detail with reference to embodiments.

### «Printing sheet»

The printing sheet according to the present invention includes the sheet-like substrate and the coating layer as defined in the current claim 1.

As the printing sheet according to the present invention, other constitutions are not particularly limited as long as the printing sheet is in the form having the coating layer described above on at least one surface of the substrate. For example, an intermediate layer having a certain function such as a sealant layer for improving adhesiveness between the substrate and the coating layer, an inner printing layer for providing coloring, patterns, or the like to the printing sheet, a shielding layer, a protection layer on the substrate surface where the coating layer is not provided, an adhesion layer, and further a protection layer on the surface of the coating layer may be optionally provided.

### (1) Substrate

The material of the substrate in the printing sheet according to the present invention is limited to the polyolefin-based resin and the inorganic substance powder in a ratio of 50:50 to 10:90 in a mass ratio as the substrate is preferable from the viewpoint of environment preservation and with respect to improvement in properties such as mechanical strength and heat resistance.

### (Resin component)

The resin constituting the plastic sheet or the inorganic substance powder-blended thermoplastic plastic sheet is not particularly limited. Various resins may be used depending on, for example, the application and function of the printing sheet. Examples of the resin include polyolefin-based resins such as polyethylene-based resins, polypropylene-based resins, polymethyl-1-pentene, and ethylene-cyclic olefin copolymers; functional group-containing polyolefin-based resins such as ethylene-vinyl acetate copolymers, ethylene-acrylic acid copolymers, ethylene-methacrylic acid copolymers, metal salts of ethylene-methacrylic acid copolymers (ionomers), ethylene-acrylic acid alkyl ester copolymers, ethylene-methacrylic acid alkyl ester copolymers, maleic acid-modified polyethylene, and maleic acid-modified polypropylene; polyamide-based resins such as nylon-6, nylon-6,6, nylon-6,10, and nylon-6,12; thermoplastic polyester-based resins including aromatic polyester resins such as polyethylene terephthalate and its copolymer, polyethylene naphthalate, and polybutylene terephthalate and aliphatic polyester-based resins such as polybutylene succinate and polylactic acid; polycarbonate-based resins including aromatic polycarbonates and aliphatic polycarbonates; polystyrene-based resins such as atactic polystyrene, syndiotactic polystyrene, acrylonitrile-styrene (AS) copolymers, and acrylonitrile-butadiene-styrene (ABS) copolymers; polyvinyl chloride-based resins such as polyvinyl chloride and polyvinylidene chloride; polyphenylene sulfide; and polyether-based resins such as polyethersulfones, polyetherketones, and polyetheretherketones. These resins can be used singly or in combination of two or more of them.

Of these thermoplastic resins, the polyolefin-based resins, the aromatic polyester-based resins, and the aliphatic polyester-based resins are preferably used from the viewpoints of easy formability, performance aspects, economy aspects, and the like.

Here, the polyolefin-based resins refer to polyolefin-based resins containing an olefin component unit as a main component. Specific examples of the polyolefin-based resins include the polypropylene-based resin and the polyethylene-based resin as described above, and in addition polymethyl-1-pentene and ethylene-cyclic olefin copolymers, as well as a mixture of two or more of these resins. The above phrase "as a main component" means that the olefin component unit is contained in the polyolefin-based resin in an amount of 50% by mass or more. The content of the olefin component unit is preferably 75% by mass or more, more preferably 85% by mass or more, and further preferably 90% by mass or more. The method for producing the polyolefin-based resin used in the present invention is not particularly limited. The polyolefin-based resin may be obtained by any of methods using a Ziegler-Natta catalyst, a metallocene catalyst, oxygen, a radical initiator such as a peroxide, and the like.

Examples of the polypropylene-based resin include resins including a propylene component unit of 50% by mass or more. Examples of the resin include propylene homopolymers or copolymers of propylene and other α-olefins copolymerizable with propylene. Examples of the other α-olefins that can be copolymerized with propylene include α-olefins having a carbon number of 4 to 10 such as ethylene, 1-butene, isobutylene, 1-pentene, 3-methyl-1-butene, 1-hexene, 3,4-dimethyl-1-butene, 1-heptene, and 3-methyl-1-hexene. As the propylene homopolymers, any of isotactic polypropylene, syndiotactic polypropylene, atactic polypropylene, hemiisotactic polypropylene, and linear or branched polypropylene exhibiting various stereoregularities are included. The above copolymer may be a random copolymer or a block copolymer and may be not only a binary copolymer but also a ternary copolymer. Specifically, examples thereof include an ethylene-propylene random copolymer, a butene-1-propylene random copolymer, an ethylene-butene-1-propylene random ternary copolymer, and an ethylene-propylene block copolymer.

Examples of the polyethylene-based resin include resins having an ethylene component unit of 50% by mass or more. Examples of the polyethylene-based resin include high-density polyethylene (HDPE), low-density polyethylene (LDPE), medium-density polyethylene, linear low-density polyethylene (LLDPE), an ethylene-vinyl acetate copolymer, an ethylene-propylene copolymer, an ethylene-propylene-butene-1 copolymer, an ethylene-butene-1 copolymer, an ethylene-hexene-1 copolymer, an ethylene-4-methylpentene-1 copolymer, an ethylene-octene-1 copolymer, and a mixture of two or more of these resins.

Of the above-described polyolefin-based resins, the polypropylene-based resins are preferably used because they have a particularly excellent balance between mechanical strength and heat resistance.

### (Inorganic substance powder)

The inorganic substance powder that can be blended in the sheet in the case where the substrate is the inorganic substance powder-blended thermoplastic plastic sheet is not particularly limited. Examples of the inorganic substance powder include powder carbonate, sulfate, silicate, phosphate, borate, and oxide of calcium, magnesium, aluminum, titanium, iron, zinc, and the like, or hydrates thereof. Specific examples of the inorganic substance powder include powder of calcium carbonate, magnesium carbonate, zinc oxide, titanium oxide, silica, alumina, clay, talc, kaolin, aluminum hydroxide, magnesium hydroxide, aluminum silicate, magnesium silicate, calcium silicate, aluminum sulfate, magnesium sulfate, calcium sulfate, magnesium phosphate, barium sulfate, silica sand, carbon black, zeolite, molybdenum, diatomaceous earth, sericite, shirasu, calcium sulfite, sodium sulfate, potassium titanate, bentonite, and graphite. These inorganic substance powders may be synthetic products or products originated from natural minerals. These inorganic substance powder may be used singly or in combination of two or more of them.

The shape of the inorganic substance powder is not particularly limited and may be any of a particle shape, a flake shape, a granule shape, and a fiber shape. The particle shape may be a spherical shape so as to be generally obtained by a synthesis method or an irregular shape so as to be obtained by pulverizing natural minerals.

As the inorganic substance powder, calcium carbonate, magnesium carbonate, zinc oxide, titanium oxide, silica, alumina, clay, talc, kaolin, aluminum hydroxide, magnesium hydroxide, and the like are preferable and calcium carbonate is particularly preferable. The calcium carbonate may be any of what is called light calcium carbonate prepared by a synthesis method and what is called heavy calcium carbonate obtained by mechanically pulverizing and classifying a natural raw material including CaCO₃ as the main component such as limestone, and the combination of these is also applicable. From the viewpoint of economic efficiency, the heavy calcium carbonate is preferable.

Here, the heavy calcium carbonate is a product obtained by mechanically pulverizing and processing natural limestone or the like and is clearly distinguished from synthetic calcium carbonate produced by chemical precipitate reaction or the like. The pulverizing method includes a dry method and a wet method. From the viewpoint of economic efficiency, the dry method is preferable.

In order to enhance the dispersibility of the inorganic substance powder in the thermoplastic resin, the surface of the calcium carbonate particles may be previously modified in accordance with the common methods. Examples of the surface modification method include a method of physical treatment such as plasma treatment and a method of chemical treatment of the surface with a coupling agent or a surfactant. Examples of the coupling agent include a silane coupling agent and a titanium coupling agent. As the surfactant, any of an anionic surfactant, a cationic surfactant, a nonionic surfactant, and an amphoteric surfactant may be used. Examples of the surfactant include a higher fatty acid, a higher fatty acid ester, a higher fatty acid amide, and a higher fatty acid salt.

The inorganic substance powder is preferably particles and the average particle diameter is preferably 0.1 µm or more and 50.0 µm or less, more preferably 1.0 µm or more and 10.0 µm or less, and further preferably 1.0 µm or more and 5.0 µm or less. The average particle diameter of the inorganic substance powder described in the present specification refers to a value calculated from the measurement result of the specific surface area by the air permeation method in accordance with JIS M-8511. As a measurement device, for example, a specific surface area measurement apparatus Type SS-100 manufactured by SHIMADZU CORPORATION can be preferably used. In particular, particles having a particle diameter of more than 50.0 µm are preferably excluded in the particle diameter distribution thereof. On the other hand, excessively fine particles cause the viscosity at the time of kneading with the above thermoplastic resin to be significantly increased and thus the production of the formed body may be difficult. Therefore, the average particle diameter of the particles is preferably determined to be 0.5 µm or more.

The shape of the inorganic substance powder may be a fiber shape, a powder shape, a flake shape, or a granule shape.

The average fiber length of the inorganic substance powder having the fiber shape is preferably 3.0 µm or more and 20.0 µm or less. The average fiber diameter is preferably 0.2 µm or more and 1.5 µm or less. The aspect ratio is usually 10 or more and 30 or less. The average fiber length and the average fiber diameter of the inorganic substance powder having the fiber shape are measured by observation using an electron microscope and the aspect ratio is a ratio of the average fiber length to the average fiber diameter (Average fiber length/Average fiber diameter).

In the case where the substrate is the inorganic substance powder-blended thermoplastic plastic sheet as described above, the blend proportion (% by mass) of the above thermoplastic resin and the inorganic substance powder included in the sheet is preferably in a ratio of 50:50 to 10:90, more preferably 40:60 to 20:80, and further preferably 40:60 to 25:75. This is because in the case where the proportion of the inorganic substance powder is lower than 50% by mass in the blending proportions of the thermoplastic resin and the inorganic substance powder, a given texture and physical properties such as impact resistance of the inorganic substance powder-blended thermoplastic resin composition due to the blend of the inorganic substance powder cannot be obtained, whereas in the case where the proportion is higher than 90% by mass, forming processing by for example, extrusion forming or vacuum forming becomes difficult.

### (Other additives)

In the case where the substrate is the plastic sheet or the inorganic substance powder-blended thermoplastic plastic sheet, other additives as auxiliary agents can be blended in the composition of the sheet, if necessary. Examples of the other additives include plasticizers, colorants, lubricating agents, coupling agents, flowability improvers, dispersing agents, antioxidants, ultraviolet ray absorbers, flame retardants, stabilizers, antistatic agents, and foaming agents. These additives may be used singly or in combination of two or more of them.

### (Paper-based material)

Specific examples in the case where the substrate is constituted of a paper-based material include paper substrates such as glassine paper, coated paper, high-quality paper, dust-free paper, and impregnated paper and laminated paper in which a thermoplastic resin such as polyethylene is laminated on the above paper substrates.

### (Substrate constitution)

The substrate may be constituted of a single layer of sheet made of the above material. Alternatively, a plurality of layers may be laminated to form the substrate. In the case where the substrate is the plastic sheet or the inorganic substance powder-blended thermoplastic plastic sheet, the sheet may be unstretched, or may be uniaxially or biaxially stretched in the vertical or horizontal direction, or the like.

The thickness of the substrate is not particularly limited and is usually 10 µm or more and 300 µm or less and preferably 25 µm or more and 200 µm or less.

In the case where the substrate made of the plastic sheet or the inorganic substance powder-blended thermoplastic plastic sheet is used, one surface or both surfaces of the substrate may be subjected to surface treatment by an oxidation method, an irregularity formation method, or the like for the purpose of improving the adhesiveness to the coating layer provided on the surface of the substrate. Examples of the oxidation method include corona discharge treatment, flame treatment, plasma treatment, glow discharge treatment, chromic acid treatment (wet), flame treatment, hot air treatment, and ozone/ultraviolet irradiation treatment. Examples of the irregularity formation method include a sandblasting method and a solvent treatment method. Primer treatment can also be employed.

### (2) Coating layer

The coating layer of the printing sheet according to the present invention may be provided on only one surface of the substrate or may be provided on both surfaces. The thickness of the coating layer is not particularly limited and is, for example, preferably 1 µm or more and 10 µm or less, more preferably 2 µm or more and 8 µm or less, and particularly preferably 3 µm or more and 5 µm or less. The coating layer having the thickness within this range allows the coating layer to sufficiently function as an ink receiving layer, ink receiving properties such as excellent colorability and color development to be exhibited, and properties such as the water resistance of the printing sheet, the antistatic property of the surface, and the adhesiveness with an ink also to be excellent.

Thus, in the present invention, this coating layer is made by adding the clay in a proportion of 35% by mass or more and 65% by mass or less, more preferably 40% by mass or more and 60% by mass or less, and further preferably 45% by mass or more and 55% by mass or less and the light calcium carbonate in a proportion of 5% by mass or more and 30% by mass or less, more preferably 7% by mass or more and 20% by mass or less, and further preferably 9% by mass or more and 15% by mass or less to the continuous phase of the acrylic polymer serving as the matrix.

In the coating layer, presence of the clay and the light calcium carbonate in the above predetermined well-balanced amounts in the continuous phase made of the acrylic polymer provides retention of desired water resistance and whiteness of the printing sheet and improvement in adhesion due to an anchor effect caused by forming the physical irregularities at the bonding interface with the substrate. The presence of the clay and the light calcium carbonate on the surface of the coating layer in a well-balanced state provides the improvement effect in the weather resistance due to the scattering of incident light caused by forming fine irregularities on the surface of the sheet without losing smoothness of the sheet surface. The presence of the clay in the continuous phase made of the acrylic polymer allows resistivity, in particular surface resistivity to be reduced and a toner to be transferred even when high voltage is not applied, for example, in the case where the LBP printing is performed. The presence of the light calcium carbonate in the continuous phase made of the acrylic polymer allows yellowness caused by the clay to be reduced and thus the whiteness to be retained, oil resistance to be improved, the quick-drying property of the ink to be improved, and oil-based offset printability to be improved.

The coating layer having a blend amount of clay of less than the above range may cause reduction in the surface resistivity of the sheet due to the blend of clay to be insufficient and the resistivity to increase. This may cause, for example, decrease in adhesion force of a toner when the printing sheet is used in LBP printing and may also cause deterioration in transferability. In addition, the adhesion to the substrate may deteriorate. On the other hand, the coating layer having a blend amount of clay of more than the above range allows the transferability when the printing sheet is used in LBP printing to be excellent. This coating layer, however, may cause deterioration in the water resistance of the coating layer and the adverse effect of the appearance. In addition, the coating layer may fail to be formed as a continuous layer having sufficient strength.

Setting the amount of the light calcium carbonate within the above range allows the whiteness of the sheet to be retained at a desired level. Namely, the coating layer of the printing sheet according to the present invention includes the clay in a proportion of 30% by mass or more as described above and thus the yellow difference (b* value) of the sheet may increase. However, the blend of light calcium carbonate in a proportion of 5% by mass or more allows the whiteness to be effectively improved. Setting the amount of the light calcium carbonate within the above range also allows appropriate oil resistance to be exhibited, the quick-drying property of an oil-based ink to be improved, and oil-resistance offset suitability to be improved. In addition, the blend of the light calcium carbonate in a proportion of 30% by mass or less as described above allows the surface of the coating layer to be smoothed and the degree of gloss to increase. The blending proportion of more than 30% by mass causes the degree of gloss to decrease. In order to increase the degree of gloss, in particular, the proportion is 20% by mass or less and more preferably 10% by mass or less.

The coating layer of the printing sheet according to the present invention is formed by blending the clay and the light calcium carbonate in the predetermined blending proportion as described above, and thus the surface of the coating layer can be a matte surface with a certain degree of roughness or a glossy surface with an increased degree of gloss by appropriately adjusting the amounts and the particle diameters of the clay and the light calcium carbonate to be blended and the thickness of the coating layer to be formed.

Hereinafter, each component forming the coating layer according to the present invention will be described in detail.

### (Acrylic polymer forming continuous phase)

Examples of the acrylic polymer serving as the matrix of the coating layer include polymers obtained by using (meth)acrylic acid, (meth)acrylic acid esters, (meth)acrylamides, and (meth)acrylonitrile as main monomer components. The term "(meth)acrylic" used in the present specification is used in the meaning that the term includes both "acrylic" and "methacrylic".

Although not particularly limited, more specific examples of the monomer components constituting the acrylic polymers include various acrylic monomers such as
acrylic acid and methacrylic acid;
acrylic acid alkyl esters having a carbon number of 1 to 18 such as methyl acrylate, ethyl acrylate, n-propyl acrylate, isopropyl acrylate, n-butyl acrylate, isobutyl acrylate, t-butyl acrylate, hexyl acrylate, n-octyl acrylate, 2-ethylhexyl acrylate, isooctyl acrylate, nonyl acrylate, lauryl acrylate, stearyl acrylate, palmityl acrylate, or cyclohexyl acrylate;
methacrylic acid alkyl esters having a carbon number of 1 to 18 such as methyl methacrylate, ethyl methacrylate, n-propyl methacrylate, isopropyl methacrylate, n-butyl methacrylate, isobutyl methacrylate, t-butyl methacrylate, hexyl methacrylate, n-octyl methacrylate, 2-ethylhexyl methacrylate, nonyl methacrylate, lauryl methacrylate, stearyl methacrylate, palmityl methacrylate, and cyclohexyl methacrylate;
alkyl esters having a hydroxy group on the side chain of (meth)acrylic acid such as 2-hydroxyethyl acrylate, 2-hydroxyethyl methacrylate, 2-hydroxypropyl acrylate, 2-hydroxypropyl methacrylate, 4-hydroxybutyl acrylate, 4-hydroxybutyl methacrylate, and monohydroxyethyl phthalate acrylate;
polyethylene glycol diacrylate having an ethylene glycol unit in the molecule (n is preferably 3 or more and 20 or less), trimethylolpropane EO-modified triacrylate (n is preferably 3 or more and 20 or less), and phenol EO modified acrylate (n is preferably 3 or more and 20 or less) ;
alkenyloxyalkyl esters of (meth)acrylic acids such as allyloxyethyl acrylate and allyloxyethyl methacrylate;
alkyl esters having an alkoxyl group on the side chain of (meth)acrylic acid such as methoxybutyl acrylate, methoxybutyl methacrylate, methoxyethyl acrylate, methoxyethyl methacrylate, ethoxybutyl acrylate, and ethoxybutyl methacrylate;
alkenyl esters of (meth)acrylic acids such as allyl acrylate and allyl methacrylate;
alkyl esters having an epoxy group on the side chain of acrylic acid such as glycidyl acrylate, glycidyl methacrylate, methyl glycidyl acrylate, and methyl glycidyl methacrylate;
mono- or di-alkylaminoalkyl esters of (meth)acrylic acids such as diethylaminoethyl acrylate, diethylaminoethyl methacrylate, methylaminoethyl acrylate, and methylaminoethyl methacrylate;
silicone-modified (meth)acrylic acid esters having a silyl group, an alkoxysilyl group, a hydrolyzable alkoxysilyl group, or the like as a side chain;
acrylamide and methacrylamide;
(meth)acrylamides having a methylol group such as N-methylolacrylamide and N-methylolmethacrylamide;
(meth)acrylamide having an alkoxymethylol group such as N-alkoxymethylolacrylamides (for example, N-isobutoxymethylolacrylamide) and N-alkoxymethylolmethacrylamides (for example, N-isobutoxymethylolmethacrylamide);
(meth)acrylamides having an alkoxyalkyl group such as N-butoxymethylacrylamide and N-butoxymethylmethacrylamide and,
acrylonitrile and methacrylonitrile.

In the case where a crosslinked structure is introduced into the acrylic polymer by a photocuring reaction or the like to increase the film strength of the coating layer, a bifunctional or polyfunctional acrylic monomer, specifically, for example, polyfunctional (meth)acrylates such as 1,4-butandiol di(meth)acrylate, 1,6-hexanediol di(meth)acrylate, neopentyl glycol di(meth)acrylate, polyethylene glycol di(meth)acrylate described above, neopentyl glycol hydroxypivalate di(meth)acrylate, dicyclopentanyl di(meth)acrylate, caprolactone-modified dicyclopentenyl di(meth)acrylate, ethylene oxide-modified phosphate di(meth)acrylate, allylated cyclohexyl di(meth)acrylate, isocyanurate di(meth)acrylate, trimethylolpropane tri(meth)acrylate, dipentaerythritol tri(meth)acrylate, propionic acid-modified dipentaerythritol tri(meth)acrylate, pentaerythritol tri(meth)acrylate, propylene oxide-modified trimethylolpropane tri(meth)acrylate, tris(acryloxyethyl) isocyanurate, pentaerythritol tetra(meth)acrylate, dipentaerythritol penta(meth)acrylate, propionic acid-modified dipentaerythritol penta(meth)acrylate, dipentaerythritol hexa(meth)acrylate, and caprolactone-modified dipentaerythritol hexa(meth)acrylate may be blended.

These monomer components can be used singly or in combination of two or more of them.

Namely, the acrylic polymer constituting the continuous phase of the coating layer in the present invention may be a homopolymer constituted of only one of the various monomer components exemplified above or a copolymer formed by combining the various monomer components exemplified above.

In one embodiment of the present invention, a copolymer containing other monomer components in addition to the above monomer components can be used as the acrylic polymer.

The monomer components other than the above monomer components exemplified above are not particularly limited as long as the monomer components form a copolymer with the monomer components exemplified above. Examples of the monomer components other than the monomer components exemplified above include vinyl-based monomers such as vinyl acetate, vinyl chloride, vinylidene chloride, vinyl lactate, vinyl butyrate, vinyl versatate, and vinyl benzoate and ethylene, butadiene, and styrene. Preferably, from the viewpoint of the weather resistance of the obtained sheet, however, styrene is desirably not contained.

The method for forming the coating layer in the printing sheet according to the present invention is not particularly limited. Generally, from the viewpoint of excellent coatability for forming such a coating layer, the acrylic polymer is desirably used in the form of a dispersed product in water or a dissolved product in an organic solvent and in particular, the form of the dispersed product in water, that is, a form of an acrylic polymer aqueous emulsion is desirable. Therefore, the acrylic polymer preferably has the form of the aqueous emulsion at the stage of the raw material for forming the coating layer.

The emulsion polymerization itself in producing the acrylic polymer aqueous emulsion has been well known to those skilled in the art. As the surfactant used in this emulsion polymerization, anionic surfactants, cationic surfactants, amphoteric surfactants, and nonionic surfactants can be used singly or in combination of two or more of them. Of these surfactants, the nonionic surfactants and the cationic surfactants are preferable. Although not particularly limited, examples of the nonionic surfactants include polyoxyethylene alkyl ethers, polyoxyethylene alkylphenyl ethers, polyoxyethylene alkyl esters, sorbitan alkyl esters, and polyoxyethylene sorbitan alkyl esters. Although not particularly limited, examples of the cationic surfactants include dodecyltrimethylammonium chloride, stearyltrimethylammonium chloride, and N-2-ethylhexylpyridinium chloride. The most preferable surfactants are the nonionic surfactants. Of these nonionic surfactants, polyoxyethylene alkylphenyl ethers are particularly preferable. Although not particularly limited, the preferable amount of the surfactant used is usually an amount of 1% by mass to 5% by mass relative to the total amount of the monomers.

A water-soluble polymer such as gelatin or polyvinyl alcohol may be used together as a protective colloid agent.

As a radical polymerization initiator for the emulsion polymerization, water-soluble type initiators including persulfates such as potassium persulfate and ammonium persulfate, a hydrogen peroxide solution, t-butyl hydroperoxide, and azobisamidinopropane hydrochloride, and oil-soluble type initiators such as benzoyl peroxide, diisopropylperoxydicarbonate, cumylperoxyneodecanoate, cumylperoxyoctate, and azobisisobutyronitrile are exemplified. The water-soluble type initiators are preferable. Although not particularly limited, for example, the amount of the polymerization initiator is in a proportion of 0.01% by mass to 0.50% by mass relative to the total amount of the monomers.

Although not particularly limited, the polymerization reaction is usually carried out under stirring at a temperature of 35°C to 90°C. The reaction time is usually 3 hours to 40 hours. Adjusting pH by adding a basic substance at the start or end of emulsion polymerization allows the leaving stability, freezing stability, chemical stability, and the like of the emulsion to be improved. In this case, the pH of the obtained emulsion is preferably adjusted to 5 to 9. For this purpose, basic substances such as ammonia, ethylamine, diethylamine, triethylamine, ethanolamine, triethanolamine, dimethylethanolamine, caustic soda, and caustic potash may be used.

Although not particularly limited, as the acrylic polymer serving as the matrix of the coating layer, an alkyl (meth)acrylate can be preferably exemplified.

### (Clay)

In the present invention, the clay is blended in a predetermined proportion in combination with the light calcium carbonate described below in the continuous phase of the acrylic polymer serving as the matrix.

The clay used in the present invention is not particularly limited and known clay can be appropriately used. In this specification, "clay" includes not only clay minerals having a layered structure but also clay minerals having no layered structure such as imogolite and allophane. Examples of the clay minerals having a layered structure include swelling minerals such as smectite, vermiculite, montmorillonite, bentonite, illite, hectorite, halloysite, saponite, beidellite, stevensite, nontronite, smectite, mica, brittle mica, sericite (silk mica), illite, glauconite, and hydrotalcite; and non-swelling minerals such as kaolin mineral (kaolinite), serpentine, pyrophyllite, talc, chlorite, and zeolite. Examples of such clay include natural clay, synthetic clay, and organoclay.

The organoclay is not particularly limited and any known organoclay can be included. The organoclay is preferably clay that is organized by an organizing agent. The clay before being organized is not particularly limited as long as the clay is what is called a clay mineral and any clay as exemplified above may be used. Such clay may be a natural product or a synthetic product.

The organizing agent is not particularly limited and a known organizing agent capable of organizing clay can be appropriately used. Examples of the organizing agent to be used include hexyl ammonium ion, octyl ammonium ion, 2-ethylhexyl ammonium ion, dodecyl ammonium ion, lauryl ammonium ion, octadecyl ammonium ion, dioctyl dimethyl ammonium ion, trioctyl ammonium ion, dioctadecyl dimethyl ammonium ion, trioctyl ammonium ion, dioctadecyl dimethyl ammonium ion, and trioctadecyl ammonium ion.

The clay used in the present invention is not particularly limited. From the viewpoint of uniform dispersibility in the coating layer, kaolin clay is particularly preferable.

The particle diameter of the clay is not particularly limited and depends to some extent on the thickness of the coating layer to be formed. The clay desirably has an average particle diameter of 0.2 times or more and 2.0 times or less and more preferably 0.5 times or more and less than 0.8 times or less relative to the thickness of the coating layer to be formed. More specifically, for example, the volume average particle diameter is preferably 1.0 µm to 10.0 µm, more preferably 1.5 µm or more and 8.0 µm or less, and further preferably 2.0 µm or more and 6.0 µm or less. The clay having such a particle diameter range allows the clay to be blended in the coating layer to be formed with excellent dispersibility and the expected effects such as improvement in adhesion of the substrate, improvement in the printability, and the antistatic performance as described above to be more preferably exhibited.

The shape of the clay is not particularly limited and may be any of a spherical shape, an elliptical spherical shape, a flat shape, an irregular shape, and the like. The shape, however, is desirably close to a spherical shape from the viewpoint of uniform dispersibility in the coating layer. From this viewpoint, the aspect ratio of the clay is preferably 5 or less, more preferably 3 or less, and further preferably 2 or less. The aspect ratio represents major axis/minor axis.

As the clay, uniform particle size between the particles is desirable in order to provide uniform in-plane properties of the coating layer.

The specific gravity of the clay is not particularly limited. For example, the specific gravity is desirably 1.5 to 3.0 and more preferably 2.0 to 2.8 in order to provide uniform dispersion in the entire coating layer to be formed.

### (Light calcium carbonate)

In the present invention, the coating layer can include light calcium carbonate together with the clay. As described above, "light calcium carbonate" is calcium carbonate produced by a synthetic method and is distinguished from heavy calcium carbonate obtained by mechanically grinding and classifying a natural raw material including CaCO₃ as the main component such as limestone. The reason why the light calcium carbonate is used in combination with the clay instead of heavy calcium carbonate or other inorganic fine particles is that the coating layer can be smoothed and an appropriate gloss property can be retained when the light calcium carbonate is used in combination with the clay.

The method for producing light calcium carbonate is not particularly limited. In the present invention, light calcium carbonate obtained by any known method can be used. Examples of the method include a carbon dioxide gasification method or a soluble salt reaction method. The carbon dioxide gasification method is a method in which quick lime obtained by calcinating limestone is dissolved in water to form lime milk and carbon dioxide gas is reacted with the lime milk to produce light calcium carbonate. The soluble salt reaction method is a method in which a calcium chloride solution and sodium carbonate are reacted with lime milk to produce light calcium carbonate. The crystal form, size, and shape of light calcium carbonate can be controlled by the reaction conditions and the like.

The particle diameter of the light calcium carbonate used in the present invention is not particularly limited. For example, the volume average particle diameter is preferably 0.05 µm to 2.00 µm and more preferably 0.07 µm or more and 1.50 µm. The light calcium carbonate having such a particle diameter range allows the desired whiteness to be improved as a printing sheet, and at the same time, the smoothing of the coating layer and the gloss property of the sheet to be improved.

### (Other additives)

In the present invention, the coating layer may include other components such as additives other than the above components, if necessary.

Specific examples of the additives include crosslinking agents, pH adjusters, thickeners, fluidity improvers, defoaming agents, foam suppressors, surfactants, mold release agents, penetrants, coloring pigments, coloring dyes, fluorescent whitening agents, ultraviolet ray absorbers, antioxidants, preservation agents, fungicides, water resistant agents, ink fixing agents, curing agents, and weather resistant material.

Examples of the crosslinking agent include aldehyde-based compounds, melamine-based compounds, isocyanate-based compounds, zirconium-based compounds, titanium-based compounds, amide-based compounds, aluminum-based compounds, boric acid, borates, carbodiimide-based compounds, and oxazoline-based compounds.

As the ink fixing agents, a cationic resin other than the acrylic resin or a polyvalent metal salt is preferably included. Examples of the cationic resin include polyethyleneimine-based resins, polyamine-based resins, polyamide-based resins, polyamide epichlorohydrin-based resins, polyamine epichlorohydrin-based resins, polyamide polyamine epichlorohydrin-based resins, poly(diallylamine)-based resins, and dicyandiamide condensates. Examples of the polyvalent metal salt include calcium compounds, magnesium compounds, zirconium compounds, titanium compounds, and aluminum compounds. Of these ink fixing agents, calcium compounds are preferable and calcium nitrate tetrahydrate is more preferable.

The defoaming agents are not particularly limited. For example, mineral oil-based defoaming agents, polyether-based defoaming agents, and silicone-based defoaming agents are used. The mineral oil-based defoaming agents are preferred. Examples of the hydrophobic silica type mineral oil-based defoaming agents include, but are not limited to, Nopco 8034, Nopco 8034-L, SN Deformer AP, SN Deformer H-2, SN Deformer TP-33, SN deformer VL, SN deformer 113, SN deformer 154, SN deformer 154S, SN deformer 313, SN deformer 314, SN deformer 316, SN deformer 317, SN deformer 318, SN deformer 319, SN deformer 321 and SN deformer 323, SN deformer 364, SN deformer 414, SN deformer 456, SN deformer 474, SN deformer 476-L, SN deformer 480, SN deformer 777, SN deformer 1341, and SN deformer 1361 (manufactured by SAN NOPCO LIMITED), and BYK-1740 (manufactured by BYK-Chemie GmbH). Examples of the metal soap type mineral oil-based defoaming agents include, but are not limited to, Nopco DF-122, Nopco DF-122-NS, Nopco NDW, Nopco NXZ, SN Deformer 122-SV, SN Deformer 269, and SN Deformer 1010 (manufactured by SAN NOPCO LIMITED). Examples of the amide wax type mineral oil-based defoaming agents include, but are not limited to, Nopco 267-A, Nopco DF-124-L, SN Defoamer TP-39, SN Defoamer 477T, SN Defoamer 477-NS, SN Defoamer 479, SN Defoamer 1044, SN Defoamer 1320, SN Defoamer 1340, SN Defoamer 1360, and SN Defoamer 5100 (manufactured by SAN NOPCO LIMITED). These defoaming agents may be used singly or may be used in combination of two or more of them. The amount of the defoaming agent used is not particularly limited, and is desirably 0.01 to 0.03% by mass relative to the entire coating liquid forming the coating layer.

Fine particles other than the clay and the light calcium carbonate may be added to the coating layer according to the present invention as long as the fine particles do not inhibit the excellent effect described above exhibited by using the clay and the light calcium carbonate together within the range of the predetermined amount. However, it is desired that the other fine particles are substantially not included. In particular, for example, polymer particles such as (meth)acrylic acid ester-based resin particles represented by polymethyl methacrylate particles are not substantially included.

For example, in the case where the acrylic polymer aqueous emulsion is used as the acrylic polymer to be the matrix of the coating layer, the coating liquid for forming the coating layer can be prepared by adding the clay or the dispersion thereof in water or the like and the light calcium carbonate or a dispersion thereof in water or the like into water that is a dispersion medium of the acrylic polymer aqueous emulsion and dispersing the resultant mixture using an appropriate mixer or dispersing apparatus such as a wet colloid mill, an edged turbine, and a paddle blade at a rotation condition of 500 rpm to 3,000 rpm for usually 1 minute to 5 minutes. When the clay and the light calcium carbonate are charged into the acrylic polymer aqueous emulsion as they are, agglomeration may occur. Therefore, the clay and/or the light calcium carbonate is desirably blended in the acrylic polymer aqueous emulsion after a dispersion in which the clay and/or the light calcium carbonate is dispersed in a medium such as water is previously prepared with the dispersing agent being blended, if necessary. The specific gravities of the clay and the light calcium carbonate are almost equal and thus each of the clay and light calcium carbonate does not exist in a state of uneven distribution and thus both can be dispersed in a state of uniform distribution.

### <Method for producing printing sheet>

As the method for producing the printing sheet according to the present invention, known methods for forming the coating layer on a surface of a substrate may be used. For example, the printing sheet can be produced by applying the coating liquid made of the acrylic polymer aqueous emulsion formed by blending the clay in a proportion of 35% by mass to 65% by mass and the light calcium carbonate in a proportion of 5% by mass to 30% by mass in a dried mass to one surface or both surfaces of the substrate using an appropriate technique such as roll coating, blade coating, bar coating, brush coating, spray coating, and dipping and thereafter drying and curing the coating layer. The temperature conditions at the time of drying or curing the coating layer are not particularly limited. For example, drying or curing can be performed at a temperature of 90°C to 120°C.

In the aspect in which the sheet made of the inorganic substance powder-blended thermoplastic plastic is used as the substrate as described above, for example, a substrate including the polyolefin resin and the inorganic substance powder in a mass ratio of 50:50 to 10:90 is extruded to form a sheet-like product. The sheet-like product is subjected to stretching treatment and the coating liquid made of the acrylic polymer aqueous emulsion formed by blending the clay in a proportion of 35% by mass or more and 65% by mass or less and the light calcium carbonate in a proportion of 5% by mass or more and 30% by mass in a dried mass is applied onto one surface or both surfaces of the substrate sheet by an appropriate method and thereafter the coating layer is dried and cured to produce the printing sheet. In order to form the sheet made of the inorganic substance powder-blended thermoplastic plastic, the inorganic substance powder and the polyolefin resin can be mixed by kneading and melting the polyolefin resin and the inorganic substance powder before the materials are fed from a hopper to a forming machine or simultaneously kneading and melting the polyolefin resin and the inorganic substance powder at the time of forming using a forming machine. The same applies to other additives other than the inorganic substance powder. The kneading and melting are preferably carried out by applying high shear stress to the kneading while the inorganic substance powder is being uniformly dispersed in the polyolefin resin and preferably carried out using a twin-screw kneader to knead. At the time of blending the inorganic substance powder with the polyolefin resin, as the temperature becomes higher, more odor tends to be generated. Therefore, an aspect in which the mixture is treated at a temperature of the melting point of the polyolefin resin + 55°C or lower, preferably at a temperature of the melting point of the polyolefin resin or higher and the melting point of the polyolefin resin + 55°C or lower, and further preferably at a temperature of the melting point of the polyolefin resin + 10°C or higher and the melting point of the thermoplastic resin + 45°C or lower is preferable.

The forming temperature at the time of extrusion forming into the sheet-like product is preferably the same temperature as the temperature described above.

The stretching treatment at the time of forming the sheet-like product is not particularly limited. The sheet-like product can be stretched in a uniaxial direction, biaxial directions, or multi-axial directions (for example, stretching by a tubular method) at the forming or after the forming of the sheet-like product. In the case of the biaxial stretching, the stretching may be sequential biaxial stretching or simultaneously biaxial stretching.

Stretching the sheet after forming (for example, longitudinal stretching and/or transverse stretching) results in decreasing the density of the sheet. The decrease in the density allows the whiteness of the sheet to be excellent.

### Examples

### (Evaluation methods)

Each physical property in Examples and Comparative Examples described below was evaluated in accordance with the following methods.

### (Adhesion)

In order to examine the adhesiveness of the coating layer to the substrate, a peeling test with a cellophane adhesive tape was performed.

### · Tape for measurement

Cellophane adhesive tape (width: 24 mm) complying with JIS Z1522: 2009

### · Measurement procedure

(1) The tape is taken out in a length of about 75 mm.
(2) The tape is stuck on the sheet to be measured and the tape is rubbed with a finger so that the tape becomes almost transparent. At this time, the tape is pressed with the palm of the finger without scratching with a nail.
(3) Within 5 minutes after sticking the tape, the end of the tape is lifted so that the peeling direction and the coating layer form an angle of about 60° and the tape is surely separate from the sheet in 0.5 second to 1.0 second. The peeled surface is observed. Whether the coating layer is attached is visually observed and the adhesiveness between the coating layer and the substrate is evaluated in accordance with the following evaluation criteria.

### · Evaluation criteria

o No delamination of the coating layer exists.
Δ The delamination of the coating layer is less than 20%.
× The delamination of the coating layer is 20% or more.

### (Surface resistivity)

The surface resistivity was measured in accordance with JIS K 6911: 2006. In the measurement, 100-mm square sheet was used as the sample and the measurement was performed under the following conditions.
Temperature 23°C and humidity 50%

### (Whiteness)

Immediately after the production of the printing sheet, the state of the surface of the coating layer was visually observed and the whiteness (b*) was measured in comparison with the L*a*b* color space chromaticity diagram.

### (LBP printability)

In order to examine the LBP printability of the printing sheets, color and monochrome test patterns were printed on each of the sheets with a laser printer (product name: Versant 80 Press, manufactured by Fuji Xerox Co., Ltd.). Toner fixability was visually observed and printability was evaluated in accordance with the following evaluation criteria.

### · Evaluation criteria

o The test patterns are printed neatly and no toner delamination exists.
Δ The test patterns are printed well but the toner is slightly delaminated.
× The test patterns are not printed well and significant toner delamination occurs.

### (Offset printability)

In order to examine the offset printability of the printing sheets, a test pattern was printed using an oil-based offset ink with an offset printing machine (product name: RMGT920, manufactured by RYOBI MHI Graphic Technology Ltd.). The fixability of the bleeding and misalignment of the printing was visually observed and the offset printability (quick-drying property of the ink) was evaluated in accordance with the following evaluation criteria.

### · Evaluation criteria

o The test pattern is printed neatly and no bleeding or misalignment in the printing exists.
Δ The test pattern is printed well but bleeding and misalignment in the printing slightly occur.
× The test pattern is not printed well and bleeding and misalignment in the printing significantly occur.

### (Water resistance)

The surface of the coating layer was rubbed with a wet Kimwipe (trade name, manufactured by NIPPON PAPER CRECIA CO., LTD.) for 10 seconds. Whether water marks remained was visually observed and the water resistance was evaluated in accordance with the following evaluation criteria.

### · Evaluation criteria

o No water marks remain on the surface of the coating layer.
Δ A slight amount of stain-like water mark appears on the surface of the coating layer.
× A stain-like water mark significantly remains on the surface of the coating layer.

### (Weather resistance)

A metal halide weather test was carried out under conditions of a black panel temperature of 63°C (± 2°C), a humidity of 50% (± 5%), and an illuminance of 1,200 W/m² for 24 hours and the states of the coating layer surface before and after the test were visually observed. Color was measured in comparison with L*a*b* color space chromaticity diagram and evaluated in accordance with the following evaluation criteria.

### · Evaluation criteria

o Before and after the test of the surface of the coating layer, almost no change occurs in lightness L* and chromaticity a*b* and thus yellowing does not substantially occur.
Δ Before and after the test of the surface of the coating layer, the changes in the lightness L* and the chromaticity a* are slight but the values of the chromaticity b* increases, and thus yellowing slightly occurs.
× Before and after the test of the surface of the coating layer, both of the lightness L* and the chromaticity a*b* change, and in particular, the value of the chromaticity b* remarkably increases, and thus yellowing occurs.

### (Materials)

The components used in Examples and Comparative Examples described below were as follows.

### · Substrate

S1: To an extrusion forming machine (T-die extrusion forming apparatus, diameter 20 mm, L/D = 25) equipped with a twin-screw, 36.0 parts by mass of a polypropylene homopolymer (melting point 160°C), 60.0 parts by mass of heavy calcium carbonate particles having an average particle diameter of 2.2 µm (an average particle diameter determined by an air permeation method in accordance with JIS M-1511) as the inorganic substance powder, and further 2.0 parts by mass of sodium alkanesulfonate (alkyl group having a carbon number (average value) of 12) as a lubricating agent were charged. The charged raw materials were kneaded at a temperature of 220°C or lower. The kneaded raw material was formed into a sheet with a T-die at a forming temperature of 220°C and the sheet was stretched while being wound by a winder to prepare a sheet made of the inorganic substance powder-blended thermoplastic plastic serving as the substrate. The thickness of thus obtained sheet was 200 µm.

### · Acrylic polymer aqueous emulsion

M1: An aqueous emulsion of a(n) (meth)acrylic acid ester copolymer made by including n-butyl acrylate, methyl methacrylate, 2-ethylhexyl acrylate, methacrylic acid, vinyl acetate, and a rosin derivative in a ratio of 26:16:44:8:6:3 in a mass ratio (solid content:water = 50:50 (mass ratio))
Ma: An aqueous emulsion of a styrene-acrylic acid ester copolymer made by including styrene, benzyl acrylate, butyl acrylate, 1,6-hexanediol dimethacrylate, and 2-hydroxyethyl methacrylate in mass ratio of 84.0: 26.0: 32.0: 0.1: 0.9 (solid content:water = 20:80 (mass ratio))

### · Clay

C1: Kaolin clay (volume average particle diameter 0.3 µm, specific gravity 2.5)
C2: Kaolin clay (volume average particle diameter 0.6 µm, specific gravity 2.6)
C3: Kaolin clay (volume average particle diameter 0.9 µm, specific gravity 2.6)
C4: Kaolin clay (volume average particle diameter 1.2 µm, specific gravity 2.6)
C5: Kaolin clay (volume average particle diameter 1.5 µm, specific gravity 2.6)

### · Calcium carbonate particles

L1: Light calcium carbonate (volume average particle diameter 0.05 µm, specific gravity 2.6)
L2: Light calcium carbonate (volume average particle diameter 1.00 µm, specific gravity 2.6)
L3: Light calcium carbonate (volume average particle diameter 2.00 µm, specific gravity 2.6)
H1: Heavy calcium carbonate (volume average particle diameter 3.00 µm, specific gravity 2.6)

### Examples 1 to 16, Comparative Examples 1 to 4, and Reference Example 1

The acrylic polymer aqueous emulsion, the clay, and the calcium carbonate were blended so that the kind and the amount of the added clay and the kind and the amount of the added calcium carbonate each were as listed in Table 1 below. The resultant mixture was stirred and mixed at 3,000 rpm for 3 minutes using an edged turbine to prepare a coating layer coating liquid. The amounts of the added clay and calcium carbonate listed in Table 1 are values in terms of dried mass of the acrylic polymer aqueous emulsion. In any of the coating layer coating liquids, water was used as a dispersion medium and the solid content concentration was set to 46% by mass. In any of the coating layer coating liquids, 0.1% by mass of a surfactant was blended as a dispersing agent and 0.1% by mass of a hydrophobic silica type mineral oil-based defoaming agent was blended as a defoaming agent. These dispersing and defoaming agents were not essential components and the coating layer coating liquid was capable of being prepared without adding them. Thus prepared coating layer coating liquid was applied to the surface of the above substrate by a microgravure method so as to have a predetermined film thickness listed in Table 1 and dried at 110°C to prepare the printing sheet. The adhesion, surface resistivity, whiteness, LBP printability, offset printability, water resistance, and weather resistance of each of the obtained printing sheet were measured under the above conditions. The obtained results are listed in Table 2.

**[Table 1]**

| | Substrate | Acrylic polymer | | Clay | | Calcium carbonate | | Film thickness (µm) |
|---|---|---|---|---|---|---|---|---|
| | | Kind of aqueous emulsion | Added amount (% by mass) | Kind | Added amount (% by mass) | Kind | Added amount (% by mass) | |
| Example 1 | S1 | M1 | 40 | C1 | 55 | L1 | 5 | 4 |
| Example 2 | S1 | M1 | 40 | C1 | 50 | L1 | 10 | 4 |
| Example 3 | S1 | M1 | 40 | C1 | 40 | L1 | 20 | 4 |
| Example 4 | S1 | M1 | 40 | C1 | 35 | L1 | 25 | 4 |
| Comparative Example 1 | S1 | Ma | 100 | - | 0 | - | 0 | 4 |
| Comparative Example 2 | S1 | M1 | 30 | C1 | 70 | - | 0 | 4 |
| Comparative Example 3 | S1 | M1 | 40 | C1 | 30 | L1 | 30 | 4 |
| Example 5 | S1 | M1 | 30 | C1 | 65 | L1 | 5 | 4 |
| Example 6 | S1 | M1 | 30 | C1 | 60 | L1 | 10 | 4 |
| Example 7 | S1 | M1 | 30 | C1 | 40 | L1 | 30 | 4 |
| Example 8 | S1 | M1 | 50 | C1 | 45 | L1 | 5 | 4 |
| Example 9 | S1 | M1 | 40 | C2 | 40 | L1 | 20 | 4 |
| Example 10 | S1 | M1 | 40 | C3 | 40 | L1 | 20 | 4 |
| Example 11 | S1 | M1 | 40 | C4 | 40 | L1 | 20 | 4 |
| Example 12 | S1 | M1 | 40 | C5 | 40 | L1 | 20 | 4 |
| Example 13 | S1 | M1 | 40 | C1 | 40 | L2 | 20 | 4 |
| Example 14 | S1 | M1 | 40 | C1 | 40 | L3 | 20 | 4 |
| Comparative Example 4 | S1 | M1 | 40 | C1 | 40 | H1 | 20 | 4 |
| Example 15 | S1 | M1 | 40 | C1 | 40 | L1 | 20 | 2 |
| Example 16 | S1 | M1 | 40 | C1 | 40 | L1 | 20 | 8 |
| Reference Example 1 | S1 | Ma | 40 | C1 | 40 | L1 | 20 | 4 |

**[Table 2]**

| | Adhesion | Surface resistivity [Ω] | Whiteness (b*) | LBP printability | Offset printability | Water resistance | Weather resistance |
|---|---|---|---|---|---|---|---|
| Example 1 | ○ | 1.00E+10 | 1.5 | ○ | ○ | ○ | ○ |
| Example 2 | ○ | 1.00E+10 | 1.0 | ○ | ○ | ○ | ○ |
| Example 3 | ○ | 1.00E+11 | 0.9 | ○ | ○ | ○ | ○ |
| Example 4 | ○ | 1.00E+12 | 0.9 | ○ | ○ | ○ | ○ |
| Comparative Example 1 | ○ | 1.00E+10 | 0.6 | Δ | Δ | ○ | × |
| Comparative Example 2 | ○ | 1.00E+9 | 2.0 | ○ | Δ | × | ○ |
| Comparative Example 3 | × | 1.00E+12 | 0.6 | Δ | Δ | ○ | ○ |
| Example 5 | ○ | 1.00E+10 | 1.0 | ○ | ○ | ○ | ○ |
| Example 6 | ○ | 1.00E+10 | 0.9 | ○ | ○ | ○ | ○ |
| Example 7 | ○ | 1.00E+12 | 0.9 | ○ | ○ | ○ | ○ |
| Example 8 | ○ | 1.00E+10 | 1.3 | ○ | ○ | ○ | ○ |
| Example 9 | ○ | 1.00E+11 | 0.9 | ○ | ○ | ○ | ○ |
| Example 10 | ○ | 1.00E+10 | 0.9 | ○ | ○ | ○ | ○ |
| Example 11 | ○ | 1.00E+10 | 0.9 | ○ | ○ | ○ | ○ |
| Example 12 | ○ | 1.00E+10 | 0.9 | ○ | ○ | ○ | ○ |
| Example 13 | ○ | 1.00E+10 | 0.9 | ○ | ○ | ○ | ○ |
| Example 14 | ○ | 1.00E+10 | 0.9 | ○ | ○ | ○ | ○ |
| Comparative Example 4 | × | 1.00E+11 | 0.5 | Δ | Δ | ○ | ○ |
| Example 15 | ○ | 1.00E+10 | 0.9 | ○ | ○ | ○ | ○ |
| Example 16 | ○ | 1.00E+10 | 1.0 | ○ | ○ | ○ | ○ |
| Reference Example 1 | ○ | 1.00E+10 | 0.8 | ○ | ○ | ○ | Δ |

In every Example of the printing sheet according to the present invention, the printing sheet having excellent adhesion (adhesiveness of the coating layer to the substrate) and having sufficiently excellent properties from the viewpoints of the whiteness, LBP printability, oil-based offset printability, surface resistivity, water resistance, and weather resistance was obtained. In contrast, with respect to Comparative Example 1, which has the constitution made of the conventional acrylic coating layer alone, the adhesion was poor and problems from the viewpoints of LBP printability, offset printability, surface resistivity, water resistance, and weather resistance arose, resulting in generating yellowing. With respect to Comparative Example 2, in which the clay alone was added and the light calcium carbonate was not added, the printing sheet was rather inferior from the viewpoints of the offset printability, water resistance, and weather resistance. With respect to Comparative Example 3, in which the amount of the added clay and the amount of the added light calcium carbonate were the same, the whiteness was improved but the surface resistivity was high.

## Claims

1. A printing sheet comprising:
a coating layer formed on one surface or both surfaces of a substrate, the coating layer containing clay in a proportion of 35% by mass or more and 65% by mass or less and light calcium carbonate in a proportion of 5% by mass or more and 30% by mass or less in a continuous phase of an acrylic polymer, wherein the substrate is a substrate including a polyolefin-based resin and an inorganic substance powder in a ratio of 50:50 to 10:90 in a mass ratio.

2. The printing sheet according to claim 1, wherein the inorganic substance powder is a calcium carbonate powder.

3. The printing sheet according to claim1 or 2, wherein a volume average particle diameter of the clay is 1.0 µm or more and 10.0 µm or less.

4. The printing sheet according to any one of claims 1 to 3, wherein a volume average particle diameter of the light calcium carbonate is 0.05 µm or more and 2.00 µm or less.

5. The printing sheet according to any one of claims 1 to 4, wherein the acrylic polymer is an alkyl (meth)acrylate.

6. The printing sheet according to claim 5, wherein the alkyl (meth)acrylate is a kind or two or more kinds of alkyl (meth)acrylates selected from the group consisting of methyl acrylate, ethyl acrylate, n-propyl acrylate, isopropyl acrylate, n-butyl acrylate, isobutyl acrylate, n-octyl acrylate, 2-ethylhexyl acrylate, isooctyl acrylate, nonyl acrylate, methyl methacrylate, ethyl methacrylate, n-propyl methacrylate, isopropyl methacrylate, n-butyl methacrylate, isobutyl methacrylate, n-octyl methacrylate, 2-ethylhexyl methacrylate, isooctyl methacrylate, 2-hydroxymethyl acrylate, 2-hydroxyethyl methacrylate, 2-hydroxypropyl acrylate, and 2-hydroxypropyl methacrylate.

7. A method for producing a printing sheet, the method comprising:
applying an acrylic polymer aqueous emulsion containing clay in a proportion of 35% by mass or more and 65% by mass or less and light calcium carbonate in a proportion of 5% by mass or more and 30% by mass or less in a dried mass in a continuous phase of an acrylic polymer to one surface or both surfaces of a substrate, wherein the substrate is a substrate including a polyolefin-based resin and an inorganic substance powder in a ratio of 50:50 to 10:90 in a mass ratio.

8. The method for producing a printing sheet according to claim 7, wherein a sheet comprising a polyolefin resin and an inorganic substance powder in a mass ratio of 50:50 to 10:90 is extruded, the sheet is subjected to a stretching treatment process to form the substrate, and the acrylic polymer aqueous emulsion is applied to one surface or both surfaces of the substrate in a form of a sheet.

## Patentansprüche

1. Druckbogen, umfassend: eine auf einer Oberfläche oder beiden Oberflächen eines Substrats gebildete Beschichtungsschicht, wobei die Beschichtungsschicht in einer kontinuierlichen Phase eines Acrylpolymeren Ton in einem Anteil von 35 Masse-% oder mehr und 65 Masse-% oder weniger und gefälltes Calciumcarbonat in einem Anteil von 5 Masse-% oder mehr und 30 Masse-% oder weniger enthält, wobei das Substrat ein Substrat ist, das ein polyolefinbasiertes Harz und ein anorganisches Pulver in einem Massenverhältnis von 50:50 bis 10:90 enthält.

2. Druckbogen nach Anspruch 1, wobei das anorganische Pulver ein Calciumcarbonat-Pulver ist.

3. Druckbogen nach Anspruch 1 oder 2, wobei der volumenmittlere Teilchendurchmesser des Tons 1,0 µm oder mehr und 10,0 µm oder weniger beträgt.

4. Druckbogen nach einem der Ansprüche 1 bis 3, wobei der volumenmittlere Teilchendurchmesser des gefällten Calciumcarbonats 0,05 µm oder mehr und 2,00 µm oder weniger beträgt.

5. Druckbogen nach einem der Ansprüche 1 bis 4, wobei das Acrylpolymer ein Alkyl(meth)acrylat ist.

6. Druckbogen nach Anspruch 5, wobei das Alkyl(meth)acrylat eine oder zwei oder mehr Arten von Alkyl(meth)acrylaten ist, ausgewählt aus der Gruppe bestehend aus Methylacrylat, Ethylacrylat, n-Propylacrylat, Isopropylacrylat, n-Butylacrylat, Isobutylacrylat, n-Octylacrylat, 2-Ethylhexylacrylat, Isooctylacrylat, Nonylacrylat, Methylmethacrylat, Ethylmethacrylat, n-Propylmethacrylat, Isopropylmethacrylat, n-Butylmethacrylat, Isobutylmethacrylat, n-Octylmethacrylat, 2-Ethylhexylmethacrylat, Isooctylmethacrylat, 2-Hydroxymethylacrylat, 2-Hydroxyethylmethacrylat, 2-Hydroxypropylacrylat und 2-Hydroxypropylmethacrylat.

7. Verfahren zur Herstellung eines Druckbogens, umfassend: Aufbringen einer wässrigen Acrylpolymer-Emulsion, die in der getrockneten Masse in einer kontinuierlichen Phase eines Acrylpolymeren Ton in einem Anteil von 35 Masse-% oder mehr und 65 Masse-% oder weniger und gefälltes Calciumcarbonat in einem Anteil von 5 Masse-% oder mehr und 30 Masse-% oder weniger enthält, auf eine Oberfläche oder beide Oberflächen eines Substrats, wobei das Substrat ein Substrat ist, das ein polyolefinbasiertes Harz und ein anorganisches Pulver in einem Massenverhältnis von 50:50 bis 10:90 enthält.

8. Verfahren zur Herstellung eines Druckbogens nach Anspruch 7, wobei ein Bogen, der ein Polyolefinharz und ein anorganisches Pulver in einem Massenverhältnis von 50:50 bis 10:90 enthält, extrudiert wird, der Bogen einem Streckbehandlungsprozess unterzogen wird, um das Substrat zu bilden, und die wässrige Acrylpolymer-Emulsion auf eine Oberfläche oder beide Oberflächen des Substrats in Form eines Bogens aufgebracht wird.

## Revendications

1. Feuille d'impression comprenant :
une couche de revêtement formée sur une surface ou sur les deux surfaces d'un substrat, la couche de revêtement contenant de l'argile dans une proportion de 35 % en masse ou plus et 65 % en masse ou moins et du carbonate de calcium léger dans une proportion de 5 % en masse ou plus et 30 % en masse ou moins dans une phase continue d'un polymère acrylique, dans lequel le substrat est un substrat incluant une résine à base de polyoléfine et une poudre de substance inorganique dans un rapport de 50:50 à 10:90 en rapport massique.

2. Feuille d'impression selon la revendication 1, dans laquelle la poudre de substance inorganique est une poudre de carbonate de calcium.

3. Feuille d'impression selon la revendication 1 ou la revendication 2, dans laquelle un diamètre moyen volumique des particules de l'argile est de 1,0 µm ou plus et 10,0 µm ou moins.

4. Feuille d'impression selon l'une quelconque des revendications 1 à 3, dans laquelle un diamètre moyen volumique des particules du carbonate de calcium léger est de 0,05 µm ou plus et 2,00 µm ou moins.

5. Feuille d'impression selon l'une quelconque des revendications 1 à 4, dans laquelle le polymère acrylique est un (méth)acrylate d'alkyle.

6. Feuille d'impression selon la revendication 5, dans laquelle le (méth)acrylate d'alkyle est un type ou deux types ou plus de (méth)acrylates d'alkyle sélectionnés parmi le groupe consistant en acrylate de méthyle, acrylate d'éthyle, acrylate de n-propyle, acrylate d'isopropyle, acrylate de n-butyle, acrylate d'isobutyle, acrylate de n-octyle, acrylate de 2-éthylhexyle, acrylate d'isooctyle, acrylate de nonyle, méthacrylate de méthyle, méthacrylate d'éthyle, méthacrylate de n-propyle, méthacrylate d'isopropyle, méthacrylate de n-butyle, méthacrylate d'isobutyle, méthacrylate de n-octyle, méthacrylate de 2-éthylhexyle, méthacrylate d'isooctyle, acrylate de 2-hydroxyméthyle, méthacrylate de 2-hydroxyéthyle, acrylate de 2-hydroxypropyle et méthacrylate de 2-hydroxypropyle.

7. Procédé de production d'une feuille d'impression, le procédé comprenant :
le fait d'appliquer une émulsion aqueuse de polymère acrylique contenant de l'argile dans une proportion de 35 % en masse ou plus et 65 % en masse ou moins et du carbonate de calcium léger dans une proportion de 5 % en masse ou plus et 30 % en masse ou moins dans une masse sèche dans une phase continue d'un polymère acrylique sur une surface ou sur les deux surfaces d'un substrat, dans lequel le substrat est un substrat incluant une résine à base de polyoléfine et une poudre de substance inorganique dans un rapport de 50:50 à 10:90 en rapport massique.

8. Procédé de production d'une feuille d'impression selon la revendication 7, dans lequel une feuille comprenant une résine de polyoléfine et une poudre de substance inorganique dans un rapport massique de 50:50 à 10:90 est extrudée, la feuille est soumise à un procédé de traitement d'étirage pour former le substrat, et l'émulsion aqueuse de polymère acrylique est appliquée sur une surface ou sur les deux surfaces du substrat sous forme de feuille.
